# EUROPEAN PATENT SPECIFICATION

(11) **EP 2 146 233 B1**
(45) Date of publication and mention of the grant of the patent: **04.11.2020**
(21) Application number: 07742963.7
(22) Date of filing: 08.05.2007
(51) Int. Cl.: G02B 6/44

(54) **PROCESS FOR PRODUCING OPTICAL FIBER AND OPTICAL FIBER PRODUCING APPARATUS**
PROZESS ZUR HERSTELLUNG EINER OPTISCHEN FASER UND VORRICHTUNG ZUR HERSTELLUNG EINER OPTISCHEN FASER
PROCÉDÉ DE PRODUCTION DE FIBRE OPTIQUE ET DISPOSITIF DE PRODUCTION DE FIBRE OPTIQUE

(43) Date of publication of application: 20.01.2010
(73) Proprietor: The Furukawa Electric Co., Ltd., Chiyoda-ku Tokyo 100-8322 (JP)
(72) Inventor: ORITA, Nobuaki, Tokyo 100-8322 (JP); HASLOEV, Peter, DK-2680 (DK); PEDERSEN, Flemming, DK-3520 (DK)
(74) Representative: SSM Sandmair
(86) International application number: PCT/JP2007/059528
(87) International publication number: WO 2008/139570

(56) References cited:
- EP-A1- 1 452 501
- JP-A- S6 121 931
- JP-A- 01 045 746
- JP-A- 07 300 350
- JP-A- 09 048 643
- JP-A- 09 236 732
- JP-A- 10 007 431
- JP-A- 11 092 166
- JP-A- 61 021 931
- JP-A- 61 106 442
- JP-A- 62 017 047
- JP-A- 2000 103 649
- JP-U- 07 015 744
- US-A- 4 474 830
- US-A- 4 613 521

## Description

### TECHNICAL FIELD

The present invention relates to an optical fiber manufacturing method and an optical fiber manufacturing apparatus for forming a plurality of coating layers on an outer circumference of an optical fiber after drawing.

### BACKGROUND ART

An optical fiber is manufactured by heating, melting, and drawing an optical fiber preform consisting of a glass material, forming a resin layer by applying a ultraviolet curing resin on an outer circumference of the optical fiber after drawing using a coating die, and forming a coating layer by curing the resin layer with an ultraviolet irradiation. The coating layer of the optical fiber is formed with a plurality of layers using a plurality of resins having different properties, giving a necessary strength and a variety of other characteristics to the optical fiber.

In order to give desired characteristics to the optical fiber by the coating layers, a thickness of each of the coating layers is required to be a predetermined value. For this reason, in a conventional optical fiber manufacturing method, an outer diameter of the optical fiber is measured first before forming the resin layer, an outer diameter of the optical fiber after forming the coating layer is measured, a thickness of the coating layer is calculated from a difference between the measured outer diameters, and an amount of supplying the resin is controlled in such a manner that the calculated thickness becomes a predetermined value.

One of the methods of applying the resin to the optical fiber is a dual coating method in which a plurality of resin layers is successively formed using a single coating die (see Patent Literature 1). With the dual coating method, it is possible to cure a plurality of formed resin layers at the same time by irradiating an ultraviolet from a single ultraviolet irradiating unit; and therefore, a drawing speed can be increased.

However, in the case of using the dual coating method, because a plurality of resin layers is formed using a single coating die, a total thickness of the coating layers can only be obtained by measuring an outer diameter of the optical fiber after forming the coating layers. Therefore, a thickness of each of the coating layers cannot be controlled separately.

To cope with the above problem, various methods for managing the thickness of the coating layer separately when manufacturing the optical fiber using the dual coating method have been disclosed (see Patent Literatures 2 to 5).

For example, Patent Literature 2 discloses a method of supplying a resin to a coating die in a constant rate using a gear pump. Furthermore, Patent Literature 3 discloses a method of supplying a resin to a coating die, in which a resin for forming the innermost layer is supplied by an air pressure and a resin for forming the other layers is supplied by a constant-rate pump. Moreover, Patent Literature 4 discloses a method of inserting an accumulator in a path of supplying a resin when supplying the resin to a coating die using a constant-rate pump. In addition, Patent Literature 5 discloses a method of controlling a thickness of a coating layer by calculating an amount of a resin that is applied to a coating die from an amount of fluid level change in a resin tank.
Patent Literature 1: Japanese Patent Application Laid-Open No. H9-86971
Patent Literature 2: Japanese Patent Application Laid-Open No. S61-106441
Patent Literature 3: Japanese Patent Application Laid-Open No. S61-106442
Patent Literature 4: Japanese Patent Application Laid-Open No. S61-291436
Patent Literature 5: Japanese Patent Application Laid-Open No. H10-287446

EP 1 452 501 A1 relates to a multiple feed applicator assembly for coating optical fibers. An apparatus for applying a primary coating and a secondary coating to an optical fiber is disclosed. The apparatus includes at least one pressurized source of primary coating, a first primary reservoir for applying a first layer of the primary coating to the optical fiber, a first primary die including a first primary land configured to size the first layer of the primary coating, a second primary reservoir for applying a second layer of the primary coating to the optical fiber, a second primary die including a second primary land, a pressurized source of the secondary coating, a secondary reservoir for applying a layer of the secondary coating to the optical fiber, and a secondary die including a secondary land configured to size the layer of the secondary coating.

### SUMMARY OF THE INVENTION

It is an object of the present invention to provide an improved and useful optical fiber manufacturing method in which the above-mentioned problems are eliminated. In order to achieve the above-mentioned object, there is provided an optical fiber manufacturing method according to claims 1 and 2. In addition, there is provided an apparatus for manufacturing an optical fiber according to claims 6 and 7. Advantageous embodiments are defined by the dependent claims.

### EFFECT OF THE INVENTION

According to the present invention, even when a speed of drawing an optical fiber is increased, it is possible to manufacture an optical fiber having sufficiently stabled characteristics in a longitudinal direction because a thickness of an innermost coating layer can be stabled to a predetermined value.

### BRIEF DESCRIPTION OF DRAWINGS

[Fig. 1] Fig. 1 is a block diagram for schematically illustrating an optical fiber manufacturing apparatus according to a first embodiment of the present invention.
[Fig. 2] Fig. 2 is a schematic cross section of a coating die shown in Fig. 1.
[Fig. 3] Fig. 3 is a schematic diagram for explaining a process of applying two layers of resin layer on an outer circumference of an optical fiber by the coating die shown in Fig. 2.
[Fig. 4] Fig. 4 is a schematic partial cross section of a constant-rate pump, which is a single-axis eccentric screw pump.

### EXPLANATIONS OF LETTERS OR NUMERALS

- 1: Optical fiber preform
- 11 to 13: Optical fiber
- 2: Drawing furnace
- 21: Heater
- 31, 33: Laser outer-diameter measuring unit
- 32: Ultraviolet irradiating unit
- 34: Guide roller
- 35: Winding unit
- 4: Temperature control unit
- 41a: Lower gas inlet
- 42b: Upper gas vent
- 41: Cooling tube
- 42: Pump
- 5: Coating die
- 51: Nipple member
- 51a to 53a, 53b: Hole
- 52: Inner-layer coating die member
- 53: Outer-layer coating die member
- 54a: Upper sleeve member
- 54b: Lower sleeve member
- 55: Outside sleeve member
- 55a: Resin supplying port
- 55b: Resin supplying port
- 6, 7: Resin supplying unit
- 61: Constant-rate pump
- 61a: Driving motor
- 61b: Driving shaft
- 61c: Case
- 61d, 61j: Bearing
- 61e, 61g: Joint unit
- 61f: Joint shaft
- 61h: Rotor
- 61i: Stator
- 61k: Resin supplying port
- 611: Resin discharging port
- 62, 72: Resin tank
- 63, 73: Resin
- 64, 74: Pressure sensor
- 71: Squeeze pump
- 8: Resin applying unit
- 100: Manufacturing apparatus

### BEST MODE(S) FOR CARRYING OUT THE INVENTION

Exemplary embodiments of an optical fiber manufacturing method and an optical fiber manufacturing apparatus according to the present invention are explained in detail below with reference to the accompanying drawings. It should be noted that the present invention is not limited to the embodiments.

### (First Embodiment)

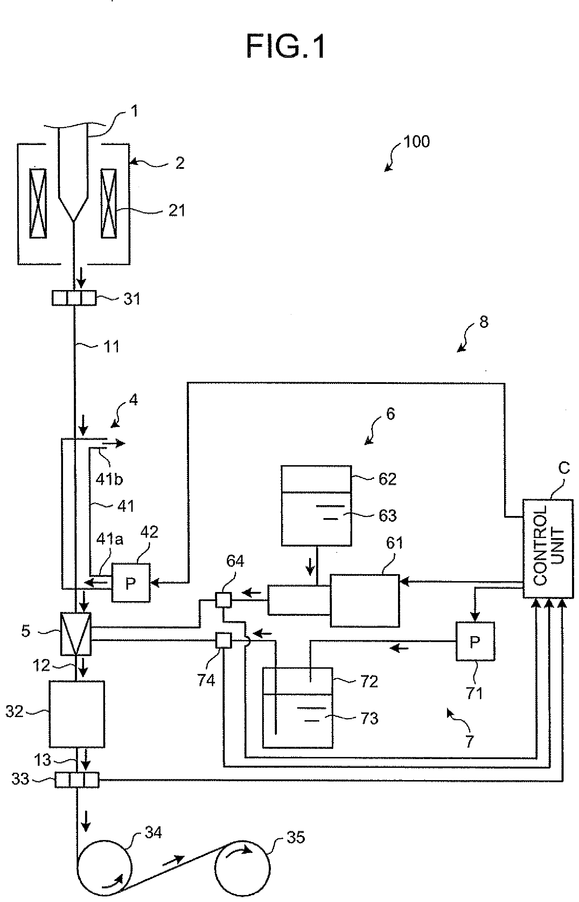

Fig. 1 is a block diagram schematically illustrating an optical fiber manufacturing apparatus according to a first embodiment of the present invention. As shown in Fig. 1, a manufacturing apparatus 100 includes a drawing furnace 2, a temperature control unit 4, a resin applying unit 8, and an ultraviolet irradiating unit 32 that is a coating-layer forming unit, and further includes laser outer-diameter measuring units 31 and 33, a guide roller 34, and a winding unit 35.

Firstly, a method of manufacturing an optical fiber using the manufacturing apparatus 100 is roughly explained. In the manufacturing apparatus 100, the drawing furnace 2 melts a leading end portion of an optical fiber perform 1 by a heater 21 to draw an optical fiber 11, the laser outer-diameter measuring unit 31 measures an outer diameter of the optical fiber 11 that is drawn, the temperature control unit 4 cools down the optical fiber 11 to a predetermined temperature, the resin applying unit 8 applies two layers of resin layer including an inner layer and an outer layer on an outer circumference of the optical fiber 11, the ultraviolet irradiating unit 32 irradiates an optical fiber 12 on which the two layers of resin layer are applied with an ultraviolet to for two layers of coating layer by simultaneously curing the two layers of resin layer, the laser outer-diameter measuring unit 33 measures an outer diameter of an optical fiber 13 on which the two layers of coating layer are formed, and the guide roller 34 and the winding unit 35 winds the optical fiber 13 on which the two layers of coating layer are formed.

Secondly, various units constituting the manufacturing apparatus 100 are explained. To get things started, the temperature control unit 4 is explained. As shown in Fig. 1, the temperature control unit 4 includes a cooling tube 41 and a pump 42. The cooling tube 41 includes a lower gas inlet 41a and an upper gas vent 41b.

The pump 42 is connected to the upper gas inlet 41b of the cooling tube 41 and sends a cooling gas into the cooling tube 41. The temperature control unit 4 cools down the optical fiber 11 that is heated by the drawing furnace 2 to a predetermined temperature in such a mechanism that the pump 42 sends the cooling gas into the cooling tube 41 from the lower gas inlet 41a and the optical fiber 11 passes through the cooling tube 41 while the cooling gas is flown inside the cooling tube 41. As for the cooling gas, a He gas having a high thermal conductivity or a mixed gas obtained by mixing the He gas with an Ar gas and the like in a desired partial pressure ratio can be used.

The squeeze pump, which is mentioned in paragraph [0027] on page 12 onwards, is an illustrative example which does not form part of the present invention.

Subsequently, the resin applying unit 8 is explained in detail. The resin applying unit 8 includes a coating die 5, a resin supplying unit 6 employing a constant-rate pump 61, a resin supplying unit 7 employing a squeeze pump 71, and a control unit C.

The resin supplying unit 6 includes the constant-rate pump 61, a resin tank 62 for storing a resin 63 in a liquid state, and a pressure sensor 64. The constant-rate pump 61 supplies the resin 63 that is fed from the resin tank 62 to the coating die 5 with a discharge amount corresponding to its rotating speed. The pressure sensor 64 is provided on a resin supplying path that connects the constant-rate pump 61 and the coating die 5, and measures a pressure of the resin 63 between the constant-rate pump 61 and the coating die 5.

The resin supplying unit 7 includes the squeeze pump 71, a resin tank 72 that stores a resin 73 in a liquid state, and a pressure sensor 74. The squeeze pump 71 supplies the resin 73 that is fed from the resin tank 72 to the coating die 5 with a discharge amount corresponding to its setting pressure.

The control unit C controls the discharge amount of the constant-rate pump 61, and controls the temperature control unit 4 at the same time. Details on a control of the control unit C will be explained later.

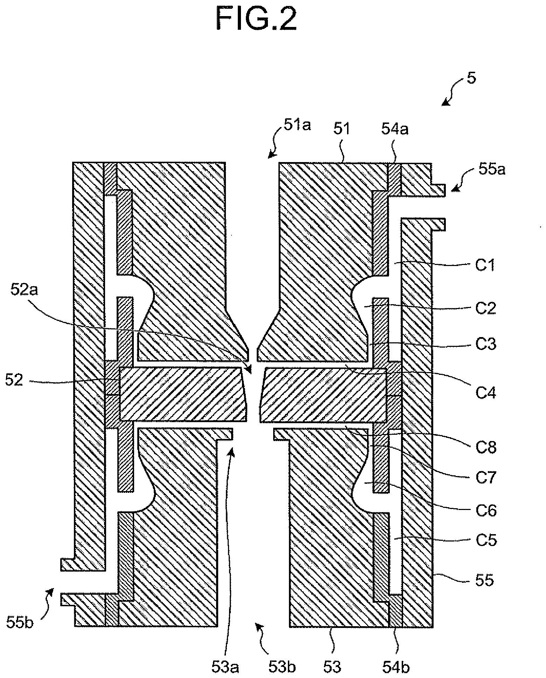

Next, the coating die 5 is explained in detail. Fig. 2 is a schematic cross section of the coating die 5 shown in Fig. 1. The coating die 5 sequentially applies two layers of resin layer including an inner layer and an outer layer on the optical fiber 11, and similar to the one described in Patent Literature 1, includes a nipple member 51, an inner-layer coating die member 52, an outer-layer coating die member 53, an upper sleeve member 54a and a lower sleeve member 54b having a substantially cylindrical shape and step portions at an upper portion and a lower portion, respectively, and an outside sleeve member 55 having a substantially cylindrical shape.

The nipple member 51 has an overall shape substantially cylindrical, and is inserted through the upper sleeve member 54a. The nipple member 51 includes a hole 51a that is formed on a center axis with an inner circumferential portion formed in a straight shape, a tapered shape where a diameter is gradually decreased, and a straight shape sequentially from an upper portion. In addition, an outer circumferential portion of the nipple member 51 has a step portion that fits with the upper sleeve member 54a on its upper portion, and its outer diameter is changed from a center portion to a lower portion in such a manner that a reservoir portion C2 and a squeezing portion C3 are formed between the nipple member 51 and an inner circumferential portion of the upper sleeve member 54a.

The inner-layer coating die member 52 has an overall shape of a disk, including a hole 52a that is formed on a center axis with an inner circumferential portion formed in a tapered shape where a diameter is gradually decreased and a straight shape sequentially from an upper portion. The inner-layer coating die member 52 fits with a lower portion of the upper sleeve member 54a and an upper portion of the lower sleeve member 54b. In addition, an upper surface of the inner-layer coating die member 52 forms a flow path C4 in a disk shape with a lower surface of the nipple member 51.

The outer-layer coating die member 53 has an overall shape substantially cylindrical, and is inserted through the lower sleeve member 54b. The outer-layer coating die member 53 includes a hole 53a and a hole 53b that are formed on the center axis with inner circumferential portions formed in straight shapes. In addition, an outer circumferential portion of the outer-layer coating die member 53 has a step portion that fits with the lower sleeve member 54b on its lower portion, and its outer diameter is changed from an upper portion to a center portion in such a manner that a reservoir portion C6 and a squeezing portion C7 are formed between the outer-layer coating die member 53 and an inner circumferential portion of the lower sleeve member 54b. Furthermore, an upper surface of the outer-layer coating die member 53 forms a flow path C8 in a disk shape with a lower surface of the inner-layer coating die member 52.

The upper sleeve member 54a allows the nipple member 51 to be inserted, and fits with the inner-layer coating die member 52. The lower sleeve member 54b allows the outer-layer coating die member 53 to be inserted, and fits with the inner-layer coating die member 52. The upper sleeve member 54a and the lower sleeve member 54b are fixed by being inserted into the outside sleeve member 55. An outer circumferential portion of the upper sleeve member 54a forms an outer circumferential trench C1 with an inner circumferential portion of the outside sleeve member 55. The outer circumferential trench C1 is connected to a resin supplying port 55a formed at an upper portion of the outside sleeve member 55, as well as to the reservoir portion C2 described above. An outer circumferential portion of the lower sleeve member 54b forms an outer circumferential trench C5 with an inner circumferential portion of the outside sleeve member 55. The outer circumferential trench C5 is connected to a resin supplying port 55b formed at a lower portion of the outside sleeve member 55, as well as to the reservoir portion C6 described above. In other words, the resin supplying port 55a, the outer circumferential trench C1, the reservoir portion C2, the squeezing portion C3, and the flow path C4 are sequentially connected, and the resin supplying port 55b, the outer circumferential trench C5, the reservoir portion C6, the squeezing portion C7, and the flow path C8 are sequentially connected on the other side.

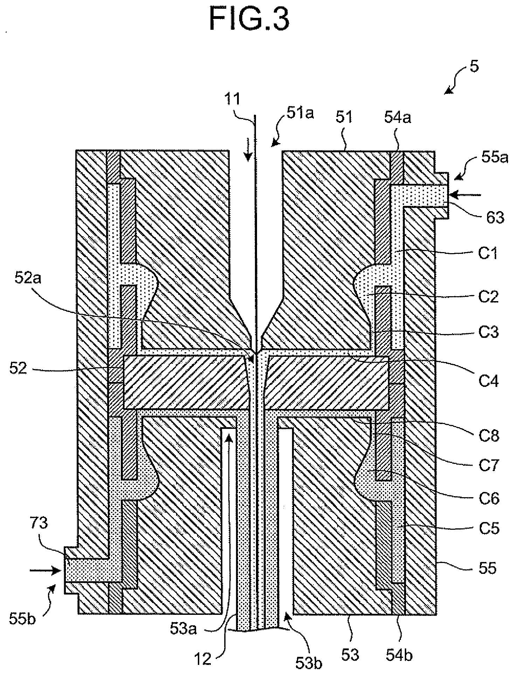

Now, a process of applying two layers of resin layer on the outer circumference of the optical fiber 11 by the coating die 5 is explained with reference to Fig. 3. The resin supplying units 6 and 7 supplies or pressure feeds the resins 63 and 73, respectively, to the optical fiber 11 that is conveyed through the holes 51a, 52a, 53a, and 53b at a predetermined linear velocity. The resin 63 that is supplied from the resin supplying unit 6 flows into the coating die 5 from the resin supplying port 55a, goes through the outer circumferential trench C1, the reservoir portion C2, the squeezing portion C3, and the flow path C4 in a row, and is shaped by the hole 52a having the inner circumferential portion formed in the tapered shape and applied on the outer circumference of the optical fiber 11. Subsequently, the resin 73 that is supplied from the resin supplying unit 7 flows into the coating die 5 from the resin supplying port 55b, goes through the outer circumferential trench C5, the reservoir portion C6, the squeezing portion C7, and the flow path C8 in a row, and is shaped by the hole 53a having the inner circumferential portion formed in the straight shape and applied on the outer circumference of the optical fiber 11 on which the resin 63 is applied. As a result, the optical fiber 12 on which the two layers of resin layer are applied is output from the hole 53a.

When the resin is supplied by a squeeze pump, a thickness of the resin layer applied by the coating die 5 is determined by a pressure and a viscosity of the resin, a temperature and a linear velocity of the optical fiber 11, and a structure and the like of the coating die 5 including a tapered angle of the hole 52a and hole diameters of the holes 52a and 53a. On the other hand, when the resin is supplied by a constant-rate pump, the thickness of the resin layer is determined by a discharge amount of the pump. Furthermore, a resin pressure of the resin 63 inside the hole 52a is determined by a supply pressure of the resin supplied to the coating die 5 and a traction pressure by a traction flow of the resin caused by a traction of the resin by the optical fiber 11 being conveyed. When the linear velocity of the optical fiber varies, the traction pressure by the optical fiber 11 is changed accordingly. In the case of supplying the resin by the squeeze pump, even when the traction pressure is changed by a variation of the linear velocity of the optical fiber 11, the supply pressure of the resin is kept constant. However, in the case of supplying the resin by the constant-rate pump, the supply pressure of the resin is changed with a change of the traction pressure by the variation of the linear velocity of the optical fiber 11.

Therefore, in the first embodiment, the control unit C controls the discharge amount of the constant-rate pump 61 in such a manner that a pressure value detected by the pressure sensor 64 becomes a predetermined value. If the discharge amount of the constant-rate pump 61 is controlled so that the pressure value detected by the pressure sensor 64 becomes a predetermined value, it is possible to keep a thickness of the inner layer of the resin layer at a predetermined value when the linear velocity and the temperature of the optical fiber 11 are predetermined values.

If the linear velocity of the optical fiber is high, a cooling time until the optical fiber 11 that is melted in the drawing furnace 2 and drawn enters into the coating die 5 becomes short. For this reason, the temperature of the optical fiber 11 is cooled down to a predetermined value by using the temperature control unit 4.

When the temperature of the optical fiber 11 varies, the traction pressure by the optical fiber 11 is changed, similar to the case where the linear velocity varies. As described above, in the first embodiment, the control unit C controls the discharge amount of the constant-rate pump 61 in such a manner that the pressure value detected by the pressure sensor 64 becomes a predetermined value. Therefore, by controlling the temperature of the optical fiber 11, it is possible to control the discharge amount of the constant-rate pump 61 while keeping the resin pressure of the resin 63 constant.

Furthermore, in the first embodiment, the control unit C controls the temperature of the optical fiber 11 when the optical fiber 11 enters into the coating die 5, by controlling the temperature control unit 4 according to the variation of the discharge amount of the constant-rate pump 61. Specifically, the control unit C calculates a difference between a setting value of a rotating speed of the constant-rate pump 61 for obtaining a discharge amount that is determined according to the linear velocity of the optical fiber 11 and an actual measurement value of the rotating speed, and controls a flowing rate of the He gas that is a cooling gas or the partial pressure ratio of the He gas in the mixed gas according to the difference.

Namely, in the first embodiment, the control unit C controls the discharge amount of the constant-rate pump 61 so that the resin pressure of the resin 63 becomes a predetermined value, and at the same time, controls the temperature of the optical fiber 11 when the optical fiber 11 enters into the coating die 5 according to a variation of the rotating speed of the constant-rate pump 61. As a result, in the first embodiment, even when the drawing speed of the optical fiber is increased, a thickness of the inner layer of the resin layer or the coating layer, which cannot be measured directly, can be kept at a desired value in the longitudinal direction in a stable manner.

On the other hand, because the hole 53a for applying the resin 73 of the outer layer has the straight shape, the resin pressure of the resin 73 inside the hole 53a is virtually determined by the supply pressure of the resin. In addition, because it is applied on the resin 63 of the inner layer that is already applied, a thickness of the applied resin layer does not virtually depend on the variation of the linear velocity or the variation of the temperature of the optical fiber 11.

For this reason, in the first embodiment, a squeezing pressure of the resin 73 is controlled in such a manner that an outer diameter of the optical fiber 13, which is measured by the laser outer-diameter measuring unit 33, becomes a predetermined value. Because the thickness of the inner layer of the resin layer is kept to the desired value in a stable manner, as described above, by keeping the outer diameter of the optical fiber 13 to a desired value, it is possible to form a resin layer or a coating layer having an outer layer with a desired thickness. The control of the squeezing pressure can be realized by controlling an output of the squeeze pump 71 based on a detection value of the pressure sensor 74.

As described above, according to the first embodiment, because each of the thicknesses of the two layers of the coating layer can be kept to a desired value in the longitudinal direction in a stable manner even when the drawing speed of the optical fiber is increased, it is possible to manufacture an optical fiber having a characteristic stable enough in the longitudinal direction with a high productivity.

Although the constant-rate pump 61 is not limited to a particular one, it is preferable to use a so-called single-axis eccentric screw pump that is capable of obtaining a constant discharge amount without a fluctuation even with an ultraviolet-curing resin having a low viscosity.

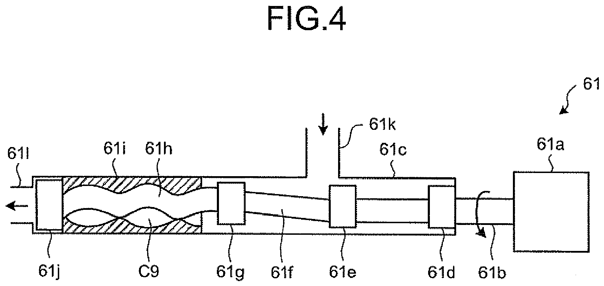

Fig. 4 is a schematic partial cross section of the constant-rate pump 61, which is the single-axis eccentric screw pump. The constant-rate pump 61 includes a driving motor 61a, a driving shaft 61b that is connected to the driving motor 61a, a bearing 61d that is housed in a case 61c for supporting the driving shaft 61b, a joint unit 61e that is formed on one end of the driving shaft 61b, a rotor 61h having a male screw shape, a joint shaft 61f that connects a joint unit 61g that is formed on one end of the rotor 61h and the joint unit 61e, a bearing 61j that supports the other end of the rotor 61h, and a stator 61i having an inner wall in a female screw shape. The rotor 61h is inserted into the stator 61i in a freely rotatable manner so that it can make an eccentric rotation with respect to the driving shaft 61b by the joint units 61e and 61g and the joint shaft 61f. The case 61c includes a resin supplying port 61k and a resin discharging port 611

The constant-rate pump 61 can discharge the resin from the resin discharging port 611 without a fluctuation by driving the driving motor 61a while supplying the resin from the resin supplying port 61k so that the rotor 61h makes an eccentric rotation by which the resin filled in a hollow portion C9 is shifted toward the left side of the figure. As for the single-axis eccentric screw pump described above, an NEMO® pump made by HEISHIN Ltd. or a metering pump made by Seepex can be used.

### (First Embodiment Example)

An optical fiber is manufactured by using the manufacturing apparatus shown in Fig. 1, according to the first embodiment. Upon manufacturing the optical fiber, the drawing speed is set to 2000 m/min, and the outer diameter of the drawn optical fiber is set to 0.125 mm.

Furthermore, the rotating speed of the constant-rate pump is controlled so that the detection value of the pressure sensor becomes 1.2 MPa. At this time, if the outer diameter of the inner layer of the coating layer calculated from the discharge amount is smaller than a target value of 0.19 mm, a control is performed to lower the temperature of the optical fiber by increasing the flow rate of the He gas in the temperature control unit so that the rotating speed of the constant-rate pump is increased. In a reverse case, a control is performed to raise the temperature of the optical fiber by decreasing the flow rate of the He gas so that the rotating speed of the constant-rate pump is decreased. Furthermore, the squeezing pressure of the squeeze pump is controlled in such a manner that the outer diameter of the coated optical fiber measured by the laser outer-diameter measuring unit becomes 0.25 mm.

An actual measurement of the linear velocity of drawing when manufacturing the optical fiber as described above shows that a variation of the linear velocity is 2000±50 m/min. However, when the outer diameter of the inner layer of the manufactured optical fiber, its variation shows 0.19±0.001 mm with a 1000-km-long optical fiber, which is extremely stable.

In the following paragraphs [0052] to [0062], illustrative examples are described, which do not form part of the present invention.

### (Comparison Example)

An optical fiber is manufactured by using a manufacturing apparatus in which the resin supplying unit 6 employing the constant-rate pump is replaced with a resin supplying unit similar to the resin supplying unit 7 employing the squeeze pump in the manufacturing apparatus 100 shown in Fig. 1. Upon manufacturing the optical fiber, the drawing speed is set to 2000 m/min, and the outer diameter of the drawn optical fiber is set to 0.125 mm.

Furthermore, the output of the squeeze pump is controlled in such a manner that the pressure value detected by the pressure sensor becomes a predetermined value. In addition, if the outer diameter of the coated optical fiber measured by the laser outer-diameter measuring unit is smaller than 0.25 mm, a control is performed to lower the temperature of the optical fiber by increasing the flow rate of the He gas in the temperature control unit, and if the outer diameter is larger than 0.25 mm, a control is performed to raise the temperature of the optical fiber by decreasing the flow rate of the He gas.

An actual measurement of the linear velocity of drawing when manufacturing the optical fiber as described above shows that a variation of the linear velocity is 2000±50 m/min, which is similar to the first embodiment example. However, when the outer diameter of the inner layer of the manufactured optical fiber, its variation shows 0.19±0.003 mm with a 1000-km-long optical fiber, which is three times of the variation of the embodiment example.

### (Second Example)

Subsequently, a second example is explained. An optical fiber manufacturing method according to the second example is for manufacturing an optical fiber by using a manufacturing apparatus in which the resin supplying unit 7 employing the squeeze pump is replaced with a resin supplying unit similar to the resin supplying unit 6 employing the constant-rate pump in the manufacturing apparatus 100 similar to the first embodiment.

In the second example, the rotating speed of the constant-rate pump is controlled according to the outer diameter measured by the laser outer-diameter measuring unit 33 in the replaced resin supplying unit. According to the second example, as the first embodiment, even when the drawing speed of the optical fiber is increased, a thickness of the inner layer of the coating layer, which cannot be measured directly, can be kept at a desired value in the longitudinal direction in a stable manner. Furthermore, because each of the thicknesses of the two layers of the coating layer can be kept to a desired value in the longitudinal direction in a stable manner, it is possible to manufacture an optical fiber having a characteristic stable enough in the longitudinal direction with a high productivity.

### (Third Example)

With a manufacture of the optical fiber as the first embodiment according to the second example, the a variation of the linear velocity is 2000±50 m/min; however, a variation of the outer diameter of the inner layer of the manufactured optical fiber shows 0.19±0.001 mm with a 1000-km-long optical fiber, which is extremely stable.

### (Fourth Example)

A fourth example is explained. An optical fiber manufacturing method according to the fourth example uses the same manufacturing apparatus as that in the first embodiment; however, a control method is different from that of the first embodiment. A difference between the first embodiment and the fourth example is explained below.

In the fourth example, unlike the first embodiment, the control unit C controls the discharge amount of the constant-rate pump 61 to a predetermined value, and at the same time, controls the temperature of the optical fiber 11 when the optical fiber 11 enters into the coating die 5 so that the resin pressure of the resin 63 becomes a value within a predetermined range. According to the fourth example, as the first embodiment, even when the drawing speed of the optical fiber is increased, a thickness of the inner layer of the coating layer, which cannot be measured directly, can be kept at a desired value in the longitudinal direction in a stable manner. Furthermore, because each of the thicknesses of the two layers of the coating layer can be kept to a desired value in the longitudinal direction in a stable manner, it is possible to manufacture an optical fiber having a characteristic stable enough in the longitudinal direction with a high productivity.

### (Fifth Example)

An optical fiber is manufactured by using the manufacturing apparatus shown in Fig. 1, according to the fourth example. Upon manufacturing the optical fiber, the drawing speed is set to 2000 m/min, and the outer diameter of the drawn optical fiber is set to 0.125 mm.

Furthermore, the rotating speed of the constant-rate pump is controlled in such a manner that an amount of the resin that is necessary for keeping the outer diameter of the inner layer of the coating layer to 0.19 mm can be supplied. At this time, if the detection value of the pressure sensor is larger than a range between 1.0 MPa and 1.2 MPa, a control is performed to lower the temperature of the optical fiber by increasing the flow rate of the He gas in the temperature control unit. Furthermore, the squeezing pressure of the squeeze pump is controlled in such a manner that the outer diameter of the coated optical fiber measured by the laser outer-diameter measuring unit becomes 0.25 mm.

An actual measurement of the linear velocity of drawing when manufacturing the optical fiber as described above shows that a variation of the linear velocity is 2000±50 m/min. However, when the outer diameter of the inner layer of the manufactured optical fiber, its variation shows 0.19±0.001 mm with a 1000-km-long optical fiber, which is extremely stable as the case of the first embodiment.

### (Second Embodiment)

Subsequently, a second embodiment of the present invention is explained. An optical fiber manufacturing method according to the second embodiment is for exchanging the resin supplying unit 7 employing the squeeze pump with the resin supplying unit 6 employing the constant-rate pump in the manufacturing apparatus 100 similar to the first embodiment, applying a resin layer that becomes the inner layer by using the resin supplying unit 76, and applying a resin layer that becomes the outer layer by using the resin supplying unit 6.

Furthermore, in the second embodiment, the control unit C controls the discharge amount of the constant-rate pump 61 to be a predetermined value, and controls the temperature control unit 4 in such a manner that the outer diameter measured by the laser outer-diameter measuring unit 33 becomes a predetermined value.

Namely, in the second embodiment, because the resin for forming the outer layer is supplied by the constant-rate pump 61 based on the above control, even when the linear velocity or the temperature of the optical fiber 11 varies, a thickness of the resin layer is not virtually changed.

Moreover, when the outer diameter measured by the laser outer-diameter measuring unit 33 varies, it is considered that a thickness of the inner layer is changed by a variation of the linear velocity of the optical fiber, and then, the control unit C controls the temperature of the optical fiber 11 when the optical fiber 11 enters into the coating die 5 by controlling the temperature control unit 4, so that the thickness of the inner layer of the resin layer becomes a predetermined thickness.

As a result, as the first embodiment, even when the drawing speed of the optical fiber is increased, a thickness of the inner layer of the coating layer, which cannot be measured directly, can be kept at a desired value in the longitudinal direction in a stable manner. Furthermore, because each of the thicknesses of the two layers of the coating layer can be kept to a desired value in the longitudinal direction in a stable manner, it is possible to manufacture an optical fiber having a characteristic stable enough in the longitudinal direction with a high productivity.

### (Second Embodiment Example)

An optical fiber is manufactured according to the second embodiment. Upon manufacturing the optical fiber, the drawing speed is set to 2000 m/min, and the outer diameter of the drawn optical fiber is set to 0.125 mm, as the first embodiment example.

Furthermore, the rotating speed of the constant-rate pump is controlled in such a manner that an amount of the resin that is necessary for keeping the outer diameter of the outer layer of the coating layer to 0.25 mm can be supplied by assuming that the outer diameter of the inner layer of the coating layer is 0.19 mm. If the outer diameter measured by the laser outer-diameter measuring unit is smaller than 0.25 mm, a control is performed to lower the temperature of the optical fiber 11 by increasing the flow rate of the He gas in the temperature control unit 4, and if the outer diameter is larger than 0.25 mm, a control is performed to raise the temperature of the optical fiber 11 by decreasing the flow rate of the He gas.

An actual measurement of the linear velocity of drawing when manufacturing the optical fiber as described above shows that a variation of the linear velocity is 2000±50 m/min. However, when the outer diameter of the inner layer of the manufactured optical fiber, its variation shows 0.19±0.0015 mm with a 1000-km-long optical fiber, which is extremely stable.

Although the above embodiments are for forming the two layers of the coating layer, the present invention is not limited to this scheme, but can be applied to a case in which three layers or more of the coating layer are formed.

### INDUSTRIAL APPLICABILITY

The optical fiber manufacturing method and the optical fiber manufacturing apparatus according to the present invention are suitable for manufacturing an optical fiber, which is used in, for example, the optical fiber communications, with a high productivity and a low cost.

## Claims

1. An optical fiber manufacturing method comprising:
a drawing step of drawing an optical fiber by melting a leading end portion of an optical fiber preform;
a resin-layer applying step of applying a resin onto the optical fiber in each of a plurality of successive holes included in a coating die (5) by passing the optical fiber through the holes, to form a plurality of resin layers on an outer circumference of the optical fiber; and
a coating-layer forming step of forming a plurality of coating layers by curing the resin layers, wherein
the resin-layer applying step being **characterized in that**:
supplying the resin to the coating die (5) by a constant-rate pump (61) while controlling a discharge amount of the constant-rate pump (61) in such a manner that a pressure of supplying the resin to at least a hole for forming an innermost layer from among the holes becomes a predetermined value,
calculating a difference between a setting value of a rotating speed of the constant-rate pump (61) for obtaining a discharge amount that is determined according to the linear velocity of the optical fiber and an actual measurement value of the rotating speed of the constant-rate pump (61),
controlling a thickness of each of the coating layers by controlling a temperature of the optical fiber when the optical fiber enters into the coating die (5), in accordance with a variation of the discharge amount of the constant-rate pump (61).

2. An optical fiber manufacturing method comprising:
a drawing step of drawing an optical fiber by melting a leading end portion of an optical fiber preform;
a resin-layer applying step of applying a resin onto the optical fiber in each of a plurality of successive holes included in a coating die (5) by passing the optical fiber through the holes, to form a plurality of resin layers on an outer circumference of the optical fiber; and
a coating-layer forming step of forming a plurality of coating layers by curing the resin layers, wherein
the resin-layer applying step being **characterized in that**
supplying the resin to the coating die (5) by a constant-rate pump (61) while controlling a discharge amount of the constant-rate pump (61) in such a manner that an amount of supplying the resin to at least a hole for forming an innermost coating layer from among the holes becomes a predetermined value that is determined so that a thickness of the innermost coating layer is a predetermined value,
the thickness of the resin layer supplied by the constant-rate pump (61) is determined by a discharge amount of the constant-rate pump (61) and a resin pressure of the resin inside the hole is determined by a supply pressure of the resin supplied to the coating die (5) and a traction pressure by a traction flow of the resin caused by a traction of the resin by the optical fiber being conveyed, wherein when the linear velocity of the optical fiber varies, the traction pressure by the optical fiber is changed accordingly,
controlling a temperature of the optical fiber when the optical fiber enters into the coating die (5) in such a manner that a pressure of supplying the resin to the hole becomes a value within a predetermined range.

3. The method according to any one of claims 1 or 2,
wherein the applying includes controlling the discharge amount of the constant-rate pump (61) by a rotating speed of the constant-rate pump (61).

4. The method according to any one of claims 1 to 3,
wherein the constant-rate pump (61) is a single-axis eccentric screw pump in which a rotor (61h) in a male screw shape is inserted into a stator (61i) having an inner wall in a female screw shape in a freely rotatable manner so that the resin is delivered by an eccentric rotation of the rotor (61h).

5. The method according to any one of claims 1 to 4,
wherein the applying includes controlling the temperature of the optical fiber by flowing a cooling gas around the optical fiber.

6. An apparatus for manufacturing an optical fiber, the apparatus comprising:
a drawing furnace (2) for drawing the optical fiber by melting a leading end portion of an optical fiber preform (1);
a temperature control unit (4) that controls a temperature of the optical fiber;
a resin-layer applying unit (8) that includes a coating die (5) having a plurality of successive holes, the resin-layer applying unit (8) applying a resin onto the optical fiber in each of the holes by passing the optical fiber of which the temperature is controlled through the holes, to form a plurality of resin layers on an outer circumference of the optical fiber; and
a coating-layer forming unit (32) that forms a plurality of coating layers by curing the resin layers, **characterized in that**
the resin-layer applying unit (8) includes
a pressure detecting unit (64, 74) that detects a pressure of supplying the resin to at least a hole for forming an innermost layer from among the holes of the coating die (5),
a constant-rate pump (61) that supplies the resin to the coating die (5), and
a control unit (C) that: calculates a difference between a setting value of a rotating speed of the constant-rate pump (61) for obtaining a discharge amount that is determined according to the linear velocity of the optical fiber and an actual measurement value of the rotating speed of the constant-rate pump (61); controls a discharge amount of the constant-rate pump (61) in such a manner that a detected resin pressure becomes a predetermined value; and controls the temperature control unit (4) so that the temperature of the optical fiber becomes a predetermined temperature, in accordance with a variation of the discharge amount of the constant-rate pump (61).

7. An apparatus for manufacturing an optical fiber, the apparatus comprising:
a drawing furnace (2) for drawing the optical fiber by melting a leading end portion of an optical fiber preform (1);
a temperature control unit (4) that controls a temperature of the optical fiber;
a resin-layer applying unit (8) that includes a coating die (5) having a plurality of successive holes, the resin-layer applying unit (8) applying a resin onto the optical fiber in each of the holes by passing the optical fiber of which the temperature is controlled through the holes, to form a plurality of resin layers on an outer circumference of the optical fiber; and
a coating-layer forming unit (32) that forms a plurality of coating layers by curing the resin layers, **characterized in that**
the resin-layer applying unit (8) includes:
a pressure detecting unit (64, 74) that detects a pressure of supplying the resin to at least a hole for forming an innermost layer from among the holes of the coating die (5),
a constant-rate pump (61) that supplies the resin to the coating die (5), wherein the thickness of the resin layer supplied by the constant-rate pump (61) is determined by a discharge amount of the constant-rate pump (61) and a resin pressure of the resin inside the hole is determined by a supply pressure of the resin supplied to the coating die (5) and a traction pressure by a traction flow of the resin caused by a traction of the resin by the optical fiber being conveyed, wherein when the linear velocity of the optical fiber varies, the traction pressure by the optical fiber is changed accordingly and
a control unit (C) that controls a discharge amount of the constant-rate pump (61) in such a manner that an amount of supplying the resin to the hole becomes a predetermined value, and controls the temperature of the optical fiber when the optical fiber enters into the coating die (5) in such a manner that the pressure of supplying the resin to the hole becomes a value within a predetermined range.

## Patentansprüche

1. Lichtleiterherstellungsverfahren, das Folgendes umfasst:
einen Ziehschritt zum Ziehen eines Lichtleiters durch Schmelzen eines Vorderabschnitts einer Lichtleitervorform;
einen Harzschichtaufbringschritt zum Aufbringen eines Harzes auf den Lichtleiter in jedem von mehreren aufeinanderfolgenden Löchern, die in einer Beschichtungsdüse (5) enthalten sind, durch Durchführen des Lichtleiters durch die Löcher, um mehrere Harzschichten auf einer äußeren Umfangsfläche des Lichtleiters zu bilden; und
einen Beschichtungsschichtbildungsschritt zum Bilden mehrerer Beschichtungsschichten durch Härten der Harzschichten, wobei
wobei der Harzschichtaufbringschritt **gekennzeichnet ist durch**:
Zuführen des Harzes zu der Beschichtungsdüse (5) **durch** eine Pumpe mit konstanter Pumprate (61), während eine Fördermenge der Pumpe mit konstanter Pumprate (61) auf eine solche Weise gesteuert wird, dass ein Druck zum Zuführen des Harzes zu wenigstens einem Loch zum Bilden einer innersten Schicht unter den Löchern zu einem vorbestimmten Wert wird,
Berechnen einer Differenz zwischen einem Einstellwert einer Drehgeschwindigkeit der Pumpe mit konstanter Pumprate (61) zum Erhalten einer Fördermenge, die gemäß der linearen Geschwindigkeit des Lichtleiters bestimmt ist, und einem tatsächlichen Messwert der Drehgeschwindigkeit der Pumpe mit konstanter Pumprate (61),
Steuern der Dicke jede der Beschichtungsschichten **durch** Steuern einer Temperatur des Lichtleiters, wenn der Lichtleiter in die Beschichtungsdüse (5) eintritt, in Übereinstimmung mit einer Variation der Fördermenge der Pumpe mit konstanter Pumprate (61).

2. Lichtleiterherstellungsverfahren, das Folgendes umfasst:
einen Ziehschritt zum Ziehen eines Lichtleiters durch Schmelzen eines Vorderabschnitts einer Lichtleitervorform;
einen Harzschichtaufbringschritt zum Aufbringen eines Harzes auf den Lichtleiter in jedem aus mehreren aufeinanderfolgenden Löchern, die in einer Beschichtungsdüse (5) enthalten sind, durch Durchführen des Lichtleiters durch die Löcher, um mehrere Harzschichten auf einer äußeren Umfangsfläche des Lichtleiters zu bilden; und
einen Beschichtungsschichtbildungsschritt zum Bilden mehrerer Beschichtungsschichten durch Härten der Harzschichten, wobei
der Harzschichtaufbringschritt **gekennzeichnet ist durch**
Zuführen des Harzes zu der Beschichtungsdüse (5) durch eine Pumpe mit konstanter Pumprate (61), während eine Fördermenge der Pumpe mit konstanter Pumprate (61) auf eine solche Weise gesteuert wird, dass eine Menge der Zuführung des Harzes zu wenigstens einem Loch zum Bilden einer innersten Beschichtungsschicht unter den Löchern zu einem vorbestimmten Wert wird, der so bestimmt ist, dass eine Dicke der innersten Beschichtungsschicht ein vorbestimmter Wert ist,
wobei die Dicke der Harzschicht, die durch die Pumpe mit konstanter Pumprate (61) zugeführt wird, wird durch eine Fördermenge der Pumpe mit konstanter Pumprate (61) bestimmt, und ein Harzdruck des Harzes innerhalb des Lochs wird durch einen Zuführungsdruck des Harzes, das der Beschichtungsdüse (5) zugeführt wird, und einen Zugdruck durch eine Zugströmung des Harzes, der durch den Zug des Harzes **dadurch, dass** der Lichtleiter befördert wird, verursacht ist, bestimmt, wobei dann, wenn die lineare Geschwindigkeit des Lichtleiters variiert, der Zugdruck durch den Lichtleiter entsprechend geändert wird,
Steuern einer Temperatur des Lichtleiters, wenn der Lichtleiter in die Beschichtungsdüse (5) eintritt, auf eine solche Weise, dass ein Druck zum Zuführen des Harzes zu dem Loch zu einem Wert innerhalb eines vorbestimmten Bereichs wird.

3. Verfahren nach einem der Ansprüche 1 oder 2,
wobei das Aufbringen das Steuern der Fördermenge der Pumpe mit konstanter Pumprate (61) durch eine Drehgeschwindigkeit der Pumpe mit konstanter Pumprate (61) enthält.

4. Verfahren nach einem der Ansprüche 1 bis 3,
wobei die Pumpe mit konstanter Pumprate (61) eine einachsige Exzenterschneckenpumpe ist, in der ein Rotor (61h) in einer männlichen Schneckenform in einen Stator (61i), der eine Innenwand in einer weiblichen Schneckenform aufweist, auf eine frei drehbare Weise eingeführt ist, so dass das Harz durch eine exzentrische Drehung des Rotors (61h) zugeführt wird.

5. Verfahren nach einem der Ansprüche 1 bis 4,
wobei das Aufbringen das Steuern der Temperatur des Lichtleiters durch Strömen eines Kühlgases um den Lichtleiter enthält.

6. Einrichtung zum Herstellen eines Lichtleiters, wobei die Einrichtung umfasst:
einen Ziehofen (2) zum Ziehen des Lichtleiters durch Schmelzen eines Vorderabschnitts einer Lichtleitervorform (1);
eine Temperatursteuereinheit (4), die eine Temperatur des Lichtleiters steuert;
eine Harzschichtaufbringeinheit (8), die eine Beschichtungsdüse (5) enthält, die mehrere aufeinanderfolgende Löcher aufweist, wobei die Harzschichtaufbringeinheit (8) ein Harz auf den Lichtleiter in jedem der Löcher durch Durchführen des Lichtleiters, dessen Temperatur gesteuert wird, durch die Löcher aufbringt, um mehrere Harzschichten auf einer äußeren Umfangsfläche des Lichtleiters zu bilden; und
eine Beschichtungsschichtbildungseinheit (32), die mehrere Beschichtungsschichten durch Härten der Harzschichten bildet, **dadurch gekennzeichnet, dass**
die Harzschichtaufbringeinheit (8) enthält:
eine Druckdetektionseinheit (64, 74), die einen Druck zum Zuführen des Harzes zu wenigstens einem Loch zum Bilden einer innersten Schicht unter den Löchern der Beschichtungsdüse (5) detektiert,
eine Pumpe mit konstanter Pumprate (61), die das Harz der Beschichtungsdüse (5) zuführt, und
eine Steuereinheit (C), die: eine Differenz zwischen einem Einstellwert einer Drehgeschwindigkeit der Pumpe mit konstanter Pumprate (61) zum Erhalten einer Fördermenge, die gemäß der linearen Geschwindigkeit des Lichtleiters bestimmt ist, und einem tatsächlichen Messwert der Drehgeschwindigkeit der Pumpe mit konstanter Pumprate (61) berechnet; eine Fördermenge der Pumpe mit konstanter Pumprate (61) auf eine solche Weise steuert, dass ein detektierter Harzdruck zu einem vorbestimmten Wert wird; und die Temperatursteuereinheit (4) steuert, so dass die Temperatur des Lichtleiters zu einer vorbestimmten Temperatur wird, in Übereinstimmung mit einer Variation der Fördermenge der Pumpe mit konstanter Pumprate (61).

7. Einrichtung zum Herstellen eines Lichtleiters, wobei die Einrichtung umfasst:
einen Ziehofen (2) zum Ziehen des Lichtleiters durch Schmelzen eines Vorderabschnitts einer Lichtleitervorform (1);
eine Temperatursteuereinheit (4), die eine Temperatur des Lichtleiters steuert;
eine Harzschichtaufbringeinheit (8), die eine Beschichtungsdüse (5) enthält, die mehrere aufeinanderfolgende Löcher aufweist, wobei die Harzschichtaufbringeinheit (8) ein Harz auf den Lichtleiter in jedem der Löcher durch Durchführen des Lichtleiters, dessen Temperatur gesteuert wird, durch die Löcher aufbringt, um mehrere Harzschichten auf einer äußeren Umfangsfläche des Lichtleiters zu bilden; und
eine Beschichtungsschichtbildungseinheit (32), die mehrere Beschichtungsschichten durch Härten der Harzschichten bildet, **dadurch gekennzeichnet, dass**
die Harzschichtaufbringeinheit (8) enthält:
eine Druckdetektionseinheit (64, 74), die einen Druck zum Zuführen des Harzes zu wenigstens einem Loch zum Bilden einer innersten Schicht unter den Löchern der Beschichtungsdüse (5) detektiert,
eine Pumpe mit konstanter Pumprate (61), die das Harz der Beschichtungsdüse (5) zuführt, wobei die Dicke der Harzschicht, die durch die Pumpe mit konstanter Pumprate (61) zugeführt wird, durch eine Fördermenge der Pumpe mit konstanter Pumprate (61) bestimmt wird, und ein Harzdruck des Harzes innerhalb des Lochs durch einen Zuführungsdruck des Harzes, das der Beschichtungsdüse (5) zugeführt wird, und einen Zugdruck durch eine Zugströmung des Harzes, das durch den Zug des Harzes dadurch, dass der Lichtleiter befördert wird, verursacht ist, bestimmt wird, wobei dann, wenn die lineare Geschwindigkeit des Lichtleiters variiert, der Zugdruck durch den Lichtleiter entsprechend geändert wird, und
eine Steuereinheit (C), die eine Fördermenge der Pumpe mit konstanter Pumprate (61) auf eine solche Weise steuert, dass eine Menge der Zuführung des Harzes zu dem Loch zu einem vorbestimmten Wert wird, und die Temperatur des Lichtleiters, wenn der Lichtleiter in die Beschichtungsdüse (5) eintritt, auf eine solche Weise steuert, dass der Druck zum Zuführen des Harzes zu dem Loch zu einem Wert innerhalb eines vorbestimmten Bereichs wird.

## Revendications

1. Procédé de fabrication de fibre optique comprenant :
une étape d'étirage consistant à étirer une fibre optique par fusion d'une partie d'extrémité avant d'une préforme de fibre optique ;
une étape d'application d'une couche de résine consistant à appliquer une résine sur la fibre optique dans chacun d'une pluralité de trous successifs inclus dans une matrice de revêtement (5) en faisant passer la fibre optique à travers les trous, pour former une pluralité de couches de résine sur une circonférence extérieure de la fibre optique ; et
une étape de formation de couche de revêtement consistant à former une pluralité de couches de revêtement en durcissant les couches de résine, dans lequel
l'étape d'application de couche de résine étant **caractérisée en ce que** :
la fourniture de la résine à la matrice de revêtement (5) par une pompe à débit constant (61) tout en contrôlant une quantité de décharge de la pompe à débit constant (61) de telle manière qu'une pression d'alimentation de la résine vers au moins un trou pour former une couche la plus interne parmi les trous devienne une valeur prédéterminée,
le calcul d'une différence entre une valeur de réglage d'une vitesse de rotation de la pompe à débit constant (61) pour obtenir une quantité de décharge qui est déterminée en fonction de la vitesse linéaire de la fibre optique et d'une valeur de mesure réelle de la vitesse de rotation de la pompe à débit constant (61),
le contrôle d'une épaisseur de chacune des couches de revêtement en contrôlant une température de la fibre optique lorsque la fibre optique entre dans la matrice de revêtement (5), conformément à une variation de la quantité de décharge de la pompe à débit constant (61).

2. Procédé de fabrication de fibre optique comprenant :
une étape d'étirage consistant à étirer une fibre optique par fusion d'une partie d'extrémité avant d'une préforme de fibre optique ;
une étape d'application d'une couche de résine consistant à appliquer une résine sur la fibre optique dans chacun d'une pluralité de trous successifs inclus dans une matrice de revêtement (5) en faisant passer la fibre optique à travers les trous, pour former une pluralité de couches de résine sur une circonférence extérieure de la fibre optique ; et
une étape de formation de couche de revêtement consistant à former une pluralité de couches de revêtement en durcissant les couches de résine, dans lequel
l'étape d'application de couche de résine étant **caractérisée en ce que**
la fourniture de la résine à la matrice de revêtement (5) par une pompe à débit constant (61) tout en contrôlant une quantité de refoulement de la pompe à débit constant (61) de telle manière qu'une quantité de fourniture de résine à au moins un trou pour former une couche de revêtement la plus interne parmi les trous devienne une valeur prédéterminée qui est déterminée de telle sorte que l'épaisseur de la couche de revêtement la plus interne est une valeur prédéterminée,
l'épaisseur de la couche de résine fournie par la pompe à débit constant (61) est déterminée par une quantité de décharge de la pompe à débit constant (61) et une pression de résine de la résine à l'intérieur du trou est déterminée par une pression d'alimentation de la résine fournie à la matrice de revêtement (5) et une pression de traction par un écoulement de traction de la résine provoqué par une traction de la résine par la fibre optique transportée, dans lequel lorsque la vitesse linéaire de la fibre optique varie, la pression de traction par la fibre optique est modifiée en conséquence,
le contrôle d'une température de la fibre optique lorsque la fibre optique entre dans la matrice de revêtement (5) de telle manière qu'une pression de fourniture de la résine au trou devient une valeur dans une plage prédéterminée.

3. Procédé selon l'une quelconque des revendications 1 ou 2,
dans lequel l'application comprend le contrôle de la quantité de décharge de la pompe à débit constant (61) par une vitesse de rotation de la pompe à débit constant (61).

4. Procédé selon l'une quelconque des revendications 1 à 3,
dans lequel la pompe à débit constant (61) est une pompe à vis excentrique mono-axe dans laquelle un rotor (61h) en forme de vis mâle est inséré dans un stator (61i) ayant une paroi intérieure en forme de vis femelle de manière à pouvoir tourner librement de sorte que la résine soit délivrée par une rotation excentrique du rotor (61h).

5. Procédé selon l'une quelconque des revendications 1 à 4,
dans lequel l'application comprend le contrôle de la température de la fibre optique en faisant circuler un gaz de refroidissement autour de la fibre optique.

6. Appareil pour fabriquer une fibre optique, l'appareil comprenant :
un four d'étirage (2) pour étirer la fibre optique en faisant fondre une partie d'extrémité avant d'une préforme de fibre optique (1) ;
une unité de contrôle de température (4) qui contrôle une température de la fibre optique ;
une unité d'application de couche de résine (8) qui comprend une matrice de revêtement (5) ayant une pluralité de trous successifs, l'unité d'application de couche de résine (8) appliquant une résine sur la fibre optique dans chacun des trous en faisant passer la fibre optique dont la température est contrôlée à travers les trous, pour former une pluralité de couches de résine sur une circonférence externe de la fibre optique ; et
une unité de formation de couche de revêtement (32) qui forme une pluralité de couches de revêtement en durcissant les couches de résine, **caractérisé en ce que**
l'unité d'application de couche de résine (8) comprend
une unité de détection de pression (64, 74) qui détecte une pression de fourniture de la résine à au moins un trou pour former une couche la plus interne parmi les trous de la matrice de revêtement (5),
une pompe à débit constant (61) qui fournit la résine à la matrice de revêtement (5), et
une unité de commande (C) qui : calcule une différence entre une valeur de réglage d'une vitesse de rotation de la pompe à débit constant (61) pour obtenir une quantité de décharge qui est déterminée en fonction de la vitesse linéaire de la fibre optique et une valeur de mesure réelle de la vitesse de rotation de la pompe à débit constant (61) ; commande une quantité de décharge de la pompe à débit constant (61) de telle sorte qu'une pression de résine détectée devienne une valeur prédéterminée ; et commande l'unité de commande de température (4) de sorte que la température de la fibre optique devienne une température prédéterminée, conformément à une variation de la quantité de décharge de la pompe à débit constant (61).

7. Appareil pour fabriquer une fibre optique, l'appareil comprenant :
un four d'étirage (2) pour étirer la fibre optique en faisant fondre une partie d'extrémité avant d'une préforme de fibre optique (1) ;
une unité de contrôle de température (4) qui contrôle une température de la fibre optique ;
une unité d'application de couche de résine (8) qui comprend une matrice de revêtement (5) ayant une pluralité de trous successifs, l'unité d'application de couche de résine (8) appliquant une résine sur la fibre optique dans chacun des trous en faisant passer la fibre optique dont la température est contrôlée à travers les trous, pour former une pluralité de couches de résine sur une circonférence externe de la fibre optique ; et
une unité de formation de couche de revêtement (32) qui forme une pluralité de couches de revêtement en durcissant les couches de résine, **caractérisé en ce que**
l'unité d'application de couche de résine (8) comprend :
une unité de détection de pression (64, 74) qui détecte une pression de fourniture de la résine à au moins un trou pour former une couche la plus interne parmi les trous de la matrice de revêtement (5),
une pompe à débit constant (61) qui fournit la résine à la matrice de revêtement (5), dans lequel l'épaisseur de la couche de résine fournie par la pompe à débit constant (61) est déterminée par une quantité de décharge de la pompe à débit constant (61) et une pression de résine de la résine à l'intérieur du trou est déterminée par une pression de fourniture de la résine fournie à la matrice de revêtement (5) et une pression de traction par un écoulement de traction de la résine provoqué par une traction de la résine par la fibre optique transportée, dans lequel lorsque la vitesse linéaire de la fibre optique varie, la pression de traction par la fibre optique est modifiée en conséquence et
une unité de commande (C) qui commande une quantité de décharge de la pompe à débit constant (61) de telle manière qu'une quantité de fourniture de la résine au trou devienne une valeur prédéterminée, et commande la température de la fibre optique lorsque la fibre optique entre dans la matrice de revêtement (5) de telle manière que la pression de fourniture de la résine au trou devienne une valeur dans une plage prédéterminée.
